# FASCICULE DE BREVET EUROPEEN

(11) **EP 3 227 189 B1**
(45) Date de publication et mention de la délivrance du brevet: **26.09.2018**
(21) Numéro de dépôt: 15817456.5
(22) Date de dépôt: 30.11.2015
(51) Int. Cl.: B65B 35/50, B65B 43/00, B65B 43/58, B65G 57/03, B65G 57/24, B65G 61/00

(54) **DISPOSITIF ET PROCÉDÉ D'EMPILAGE DE COLIS DE TAILLES DIFFÉRENTES**
VORRICHTUNG UND VERFAHREN ZUM STAPELN VON VERPACKUNGEN UNTERSCHIEDLICHER GRÖSSEN
DEVICE AND METHOD FOR STACKING PACKAGES OF DIFFERENT SIZES

(30) Priorité: 01.12.2014 FR 1461716
(43) Date de publication de la demande: 11.10.2017
(73) Titulaire: FIVES SYLEPS ROBOTICS, 33640 Ayguemorte Les Graves (FR)
(72) Inventeur: WOLF, Benoist, 33360 Cenac (FR); OUY, Samuel, 33490 Saint Pierre d'Aurillac (FR); BOISNARD,Thierry, 33140 Villenave d'Ornon (FR)
(74) Mandataire: Lavoix
(86) Numéro de dépôt international: PCT/FR2015/053266
(87) Numéro de publication internationale: WO 2016/087760

(56) Documents cités:
- EP-A1- 0 999 156
- FR-A1- 2 436 727
- US-A- 3 844 422
- US-A- 4 058 225
- US-A- 4 778 323

## Description

La présente invention concerne un dispositif d'empilage de colis de tailles différentes sur une palette, utilisant un système élévateur de palettes.

Elle concerne également un procédé d'empilage de colis hétérogènes sur une palette.

Elle trouve une application particulièrement importante bien que non exclusive dans le domaine du conditionnement de colis sur une palette selon un agencement bien précis dépendant des formes et des tailles différentes des colis.

On connaît des dispositifs de palettisation comprenant un élévateur sur lequel repose une palette vide qui vient chercher les colis disposés par une tête de dépose sur un socle escamotable par exemple, réalisée par deux plaques horizontales. Celles-ci sont agencées pour s'écarter l'une de l'autre par coulissement horizontal afin de laisser tomber les colis qu'elle contient sur la couche des colis déjà déposés sur la palette.

Dès qu'une nouvelle couche est réalisée, la palette descend grâce à l'élévateur d'une hauteur semblablement égale à celle d'une couche de colis afin que le niveau supérieur de la palette chargée reste invariablement juste au-dessous du socle escamotable, et que les colis le quittant ne tombent que d'une très faible hauteur.

On connait également des dispositifs et procédés (EP 0 999 156, US 3,844,422, US 4,058, 225, EP 0 999 156) de chargement de palettes avec des colis de mêmes tailles et de mêmes formes à un poste supérieur, sur des palettes qui descendent en cours de chargement pour être évacués à un poste inférieur.

De tels dispositifs présentent plusieurs inconvénients. Ils ne permettent pas de constituer des piles de colis hétérogènes de tailles différentes, et présentent des durées de réalisation de couches de colis importantes encore aggravées si l'on décide de charger directement la palette sans passer par l'étape de dépose sur une fausse palette. En cas de dépose directe sur les couches précédentes de colis, il n'est pas en effet possible de dissocier le flux d'amenée d'une palette vide, du flux de remplissage puisqu'il faut attendre l'évacuation d'une palette pleine pour amener une palette vide.

De plus et en général ces dispositifs ne permettent pas d'éviter que le chargement de palettes n'entraine l'arrêt complet de la mise en place des colis pendant un temps plus ou moins long.

On connaît (EP 2 358 617) des appareils d'empilage permettant de gérer l'empilage de colis de tailles différentes et ce de façon plus optimisée au niveau diagramme de temps.

Ici encore un support intermédiaire, équivalent à une fausse palette, est utilisé. Il laisse dans un premier temps tomber la première couche de colis sur la palette amenée par en dessous par un élévateur, puis vient ensuite charger la palette qui descend au fur et à mesure de façon prédéterminée.

L'opération de chute des colis sur la palette n'est réalisée qu'une seule fois, pour la première couche de colis dont la construction s'effectue pendant que la palette précédente est évacuée par le dessous puis remplacée par une palette vide qui remonte chercher les couches de colis déjà déposées sur le support intermédiaire.

Outre le fait qu'il y a un risque de déstabilisation des couches de colis préconstituées au moment de l'escamotage du support intermédiaire, on comprend qu'il y a nécessairement un risque de perte de temps du fait de la substitution des palettes sur le même élévateur.

La présente invention vise à pallier ces inconvénients et notamment et pour ce faire à former un dispositif et un procédé d'empilage répondant mieux que ceux antérieurement connus aux exigences de la pratique, notamment en ce qu'elle autorise la mise en place des colis de façon continue, et pour des colis de tailles différentes, sans générer des risques de déséquilibre lors d'une chute de hauteur par exemple.

Dans ce but la présente invention propose notamment un dispositif d'empilage de colis de tailles différentes sur une palette, comprenant des moyens d'amenée d'une palette vide, des moyens de chargement de la dite palette vide à un poste de chargement et des moyens d'évacuation de la palette après chargement. Le dispositif comprend un poste d'attente de la palette vide ainsi amenée situé à un premier niveau dit niveau supérieur, des moyens de déplacement horizontal de la palette vide du poste d'attente au poste de chargement, et des moyens de déplacement vertical de la palette comprenant un élévateur agencé pour venir saisir la palette par en dessous au poste de chargement et la déplacer verticalement vers le bas en cours de chargement entre le premier niveau et un dernier niveau dit inférieur, d'évacuation de la palette chargée.

Dans des modes de réalisation avantageux, on a par ailleurs et/ou de plus recours à l'une et/ou à l'autre des dispositions suivantes :
- les moyens d'amenée de la palette comprennent un support ajouré de soutien de la palette déplaçable longitudinalement entre une position reculée de prise en charge d'une nouvelle palette, une position intermédiaire au poste d'attente et une position au poste de changement, ledit support ou plateau ajouré étant agencé pour permettre le soulèvement par en dessous puis après retrait du plateau ajouré, l'enlèvement de la palette par l'élévateur ;
- les moyens de chargement sont agencés pour charger une première série de colis, puis, une fois ladite préhension de palette réalisée, commencer le déplacement vertical en permettant l'empilage des colis sur la première série en chargeant ensuite la palette au fur et à mesure de l'arrière vers l'avant, à niveau de chargement constant ou sensiblement constant.
Par sensiblement constant on entend avec un décalage en hauteur inférieur à ± 80 cm ;
- les moyens de chargement comprennent au moins une plaque verticale de blocage et de guidage latéral des colis lors de leur chargement, pour former une pile verticale de colis cadrés sur au moins un premier niveau. La ou les plaques peuvent être amovibles et/ou de hauteur supérieure à 50 cm, par exemple 1 m ;
- le dispositif comporte des moyens d'enrobage de la palette par un film plastique au fur et à mesure du déplacement vertical vers le bas de la palette chargée ;
- les moyens de déplacement vertical de la palette en cours de chargement comprennent des moyens de commande de la descente de la palette par pas d'une hauteur déterminée, et les moyens d'enrobage sont agencés pour enrober par ledit film plastique la partie de colis empilés en vis à vis sur ladite hauteur, avant de descendre d'un pas suivant ;
- le dispositif comprend des moyens de calcul et une mémoire agencée pour héberger une base de données contenant les caractéristiques des colis de tailles différentes à empiler, en dimensions, poids et capacité à se ranger les uns par rapport aux autres, les dits moyens de calcul étant propres à permettre de déterminer un ordre de rangement particulier et des positions spatiales pour les colis devant être empilés sur ladite palette à partir du contenu de ladite base de données. Par capacité à se ranger les uns par rapport aux autres (également appelée ici gerbabilité) on entend l'aptitude pour un nombre de colis donnés destinés à constituer une palette, à s'organiser les uns par rapport aux autres pour former des couches de hauteur sensiblement constante et sans être gênés par les colis déjà déposés lors de l'amenée des colis suivants par les moyens de chargement ;
- le dispositif comprend des moyens de chargement de plaques intercalaires sur les piles de colis en cours de chargement ;
- il comprend des moyens de mesure optique et/ou de calcul du chargement de la palette pour correspondre à un plan de chargement déterminé et de commande de la fin de descente de la palette pour évacuation en conséquence ;
- les moyens de chargement comportent au moins deux bras robotisés travaillant alternativement l'un avec l'autre ;
- chaque bras est équipé d'un préhenseur à fourche inférieure de support du colis et d'une pince de serrage supérieure de blocage en pression du colis contre la fourche inférieure.

Egalement avantageusement, l'invention propose un dispositif d'empilage de colis sur une palette, comprenant des moyens d'amenée d'une palette vide à un poste d'attente situé à un premier niveau dit niveau supérieur, des moyens pousseurs horizontaux de la palette vide du poste d'attente à un poste de chargement, des moyens de chargement de la dite palette vide audit poste de chargement, des moyens de déplacement vertical de la palette comprenant un élévateur agencé pour venir saisir la palette par en dessous au poste de chargement et la déplacer verticalement vers le bas en cours de chargement entre le premier niveau et un dernier niveau dit niveau inférieur, d'évacuation de la palette chargée, et des moyens d'évacuation de la palette après chargement, caractérisé en ce que les colis étant de tailles différentes, les moyens de chargement comprennent des moyens de calcul et une mémoire agencée pour héberger une base de données contenant les caractéristiques des colis de tailles différentes à empiler, en dimensions, poids et capacité à se ranger les uns par rapport aux autres, les dits moyens de calcul étant propres à permettre de déterminer un ordre de rangement particulier et des positions spatiales pour les colis devant être empilés sur ladite palette à partir du contenu de ladite base de données.

Dans des modes de réalisation avantageux un tel dispositif comporte de plus l'une et/ou l'autre des dispositions décrites ci-dessus.

L'invention propose également un procédé utilisant le dispositif tel que décrit ci-avant.

Elle propose aussi un procédé d'empilage de colis de tailles différentes sur une palette, caractérisé en ce qu'il comprend les étapes suivantes :
(i) on amène une palette vide à un poste d'attente situé à un premier niveau, dit niveau supérieur,
(ii) on déplace horizontalement la palette du poste d'attente à un poste de chargement, situé au même niveau,
(iii) on commence à empiler des colis sur la palette audit poste de chargement,
(iv) on déplace verticalement un chariot élévateur avec lequel on vient saisir la palette par en dessous au poste de chargement,
(v) on continue à empiler les colis sur la palette en maintenant un niveau de chargement constant ou sensiblement constant par déplacement vertical de la palette en cours de chargement entre le premier niveau et un deuxième niveau correspondant à l'empilement complet de la palette,
(vi) une palette suivante ayant été amenée au poste d'attente (en temps masqué), on finit de descendre la palette entièrement chargée à un troisième niveau, dit niveau inférieur, correspondant à un poste d'évacuation et on amène simultanément ladite palette suivante du poste d'attente au poste de chargement, puis on renouvelle les étapes (iii) à (vi) avec ladite palette suivante, tout en évacuant ladite palette entièrement chargée.

Avantageusement on déplace la palette au poste de chargement par mouvement horizontal d'un plateau ajouré de soutien de la périphérie de la palette, on soulève la palette par en dessous (au travers de la partie ajourée) pour la libérer du plateau, on retire le plateau ajouré et on descend la palette en cours de chargement.

Egalement avantageusement les caractéristiques des colis de tailles différentes à empiler, en dimensions, poids et capacité à se ranger les uns par rapport aux autres, étant stockées dans une base de données, on détermine un ordre de rangement particulier et les coordonnées spatiales des colis devant être empilés sur la palette en conséquence et on effectue ledit empilement dans ledit ordre particulier et avec lesdites positions spatiales à partir des dites données.

Avantageusement on enrobe avec un film les colis sur la palette en cours de chargement au fur et à mesure de la descente.

Dans un mode de réalisation avantageux on commande la descente de la palette en cours de chargement par pas d'une hauteur déterminée et on enrobe par un film plastique la palette chargée en colis sur une hauteur en vis à vis avant de descendre d'un pas suivant.

Avantageusement on charge les colis avec au moins deux bras robotisés en parallèle, alternativement à partir d'un convoyeur d'alimentation unique muni d'un système de séparation pour répartition des colis à deux postes de préhension séparés affectés respectivement à chacun des robots.

Egalement avantageusement on charge au moins une plaque intermédiaire sur les colis, avant de continuer et/ou terminer la palette.

La plaque est par exemple une plaque correspondant au 1/4 de la surface de la palette, en carton ondulé de 3 mm d'épaisseur.

Ceci permet notamment de lisser les niveaux de remplissage et rend les piles de colis sur la palette plus stables.

Encore avantageusement, on charge sur une première hauteur, une première partie arrière de palette puis une partie avant, et ainsi de suite sur une deuxième hauteur etc... jusqu'à remplissage total du chargement prévu.

On ne charge donc plus couche par couche mais portion de tranche verticale par portion de tranche verticale.

L'invention sera mieux comprise à la lecture de modes de réalisation donnés ci-après à titre d'exemples non limitatifs. Elle se réfère aux dessins qui l'accompagnent dans lesquels :
La figure 1 est un schéma en perspective d'un mode de réalisation d'un dispositif selon l'invention.
Les figures 1A et 1B montrent un mode de réalisation des moyens de mise en place des colis sur le ou les convoyeurs d'alimentation du dispositif de la figure 1.
La figure 1C montre en perspective les postes de dépose d'une palette vide, le poste d'attente et le poste de chargement isolés pour l'illustration du reste du dispositif selon un mode de réalisation de l'invention.
La figure 2 montre le dispositif de la figure 1 lors de la mise en place de la palette vide au poste de dépose.
Les figures 2A et 2B montrent en perspective un mode de réalisation de préhenseur de colis agencé pour effectuer la prise de colis de face (figure 2A) ou de côté (figure 2B).
Les figures 3 à 7 montrent le dispositif de la figure 1 successivement, en début de palettisation (figure 3), lors de la prise en charge par l'élévateur (figure 4), lors de la descente avec chargement et de la mise en place éventuelle d'un film d'enrobage (figure 5), puis en fin de palettisation et de mise en place du film (figure 6), et enfin après descente de la palette en position basse pour évacuation (figure 7).
La figure 8 donne un exemple de paramétrage dimensionnel d'une palette utilisable avec l'invention, pour la mise en place programmée de colis.
La figure 9 illustre un exemple de palettisation avec des colis de tailles différentes mis en oeuvre avec un mode de réalisation du procédé selon l'invention.
Les figures 9A et 9B illustrent schématiquement une dépose de colis sur colis de tailles différentes montrant les tolérances de décalage.
La figure 10 est un diagramme donnant les différentes étapes du procédé selon le mode de réalisation de l'invention plus particulièrement décrit ici.
La figure 11 est une vue en perspective d'un autre mode de réalisation de l'invention.
Les figures 12A à 12C montrent plusieurs des étapes de remplissage progressif en commençant par l'arrière pour former les piles au fur et à mesure sans être gêné par les colis déjà placés, selon un mode de réalisation de l'invention.

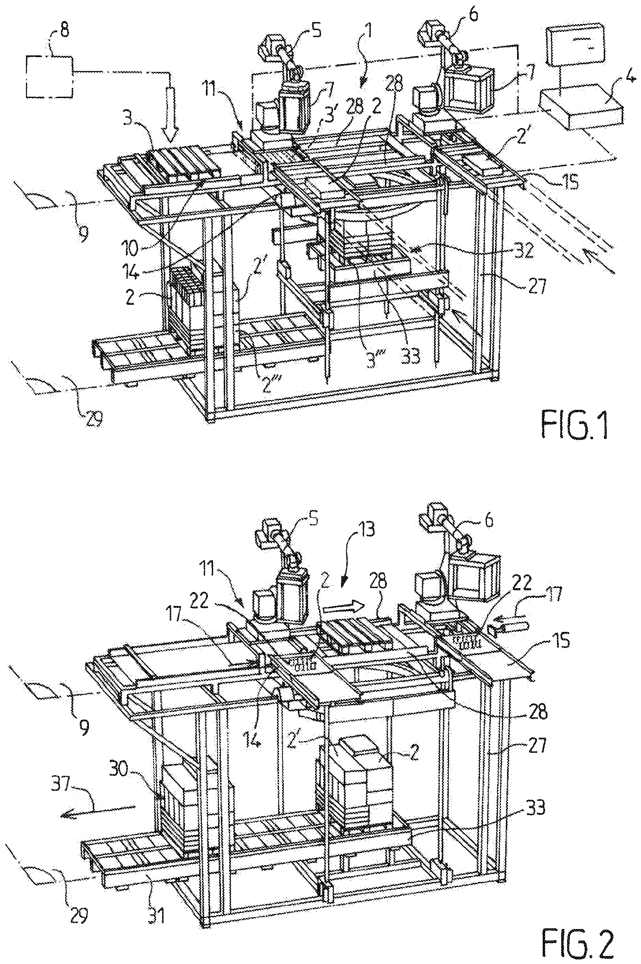

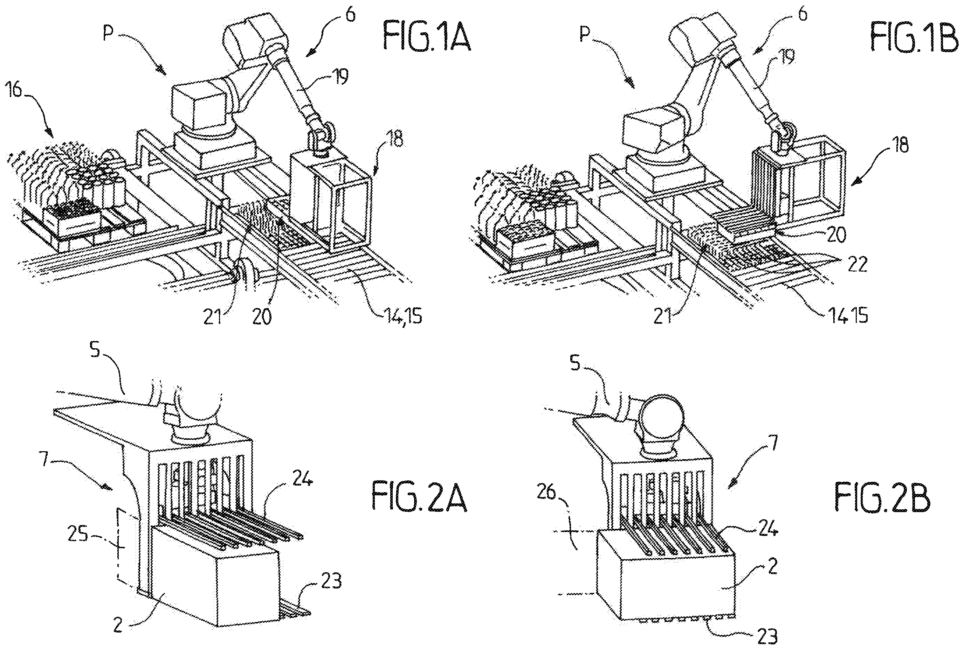

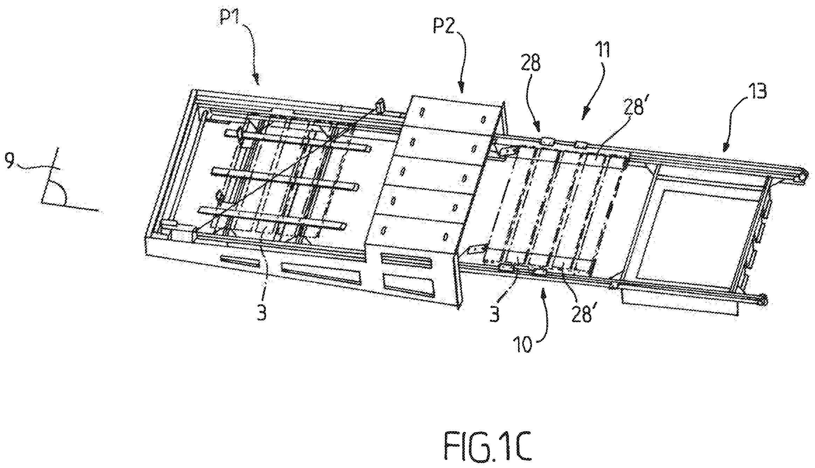

La figure 1 montre un dispositif 1 de palettisation hétérogène qui permet de palettiser des colis 2, 2'... de tailles et de formes différentes sur une seule palette 3, 3'... associé à un automate 4 mettant en oeuvre un logiciel permettant de calculer l'imbrication optimale des produits.

L'automate 4 commande deux robots polyarticulés 5, 6, par exemple des robots de la société japonaise FANUC vendu sous la référence R - 1000 ia/80F.

Ceux-ci fonctionnent en alternance et à chaque cycle, assurent la prise d'un colis 2 à l'aide d'un préhenseur 7 à fourche et à serrage et la dépose de ce colis sur la palette.

Le dispositif 1 comprend un manipulateur 8 aérien connu en lui-même d'amenée d'une palette vide 3 à un premier niveau 9 dit niveau supérieur.

Des moyens 10 de déplacement horizontal de la palette (taquets pousseurs par exemple effectuant un mouvement de va et vient) amènent la palette à un poste 11 d'attente de palette vide.

Ces moyens pousseurs amènent ensuite la palette au poste d'attente (cf. figure 2), puis au poste 13 de chargement de la palette 3 par les robots 5 et 6.

Ceux-ci vont chercher les colis à charger sur deux convoyeurs à rouleaux 14 et 15 parallèles, horizontaux, de type connu, d'amenées séquentielles des colis 2, 2'.

Plus précisément, et en référence aux figures 1A et 1B, les colis 2, 2'... arrivent sur les convoyeurs 14 et 15, qui peuvent également être formés par un convoyeur unique avec moyens séparateurs séquentiels des colis en deux postes au niveau du chargement par les robots, avec la même orientation, c'est à dire dans le sens de la longueur ou par le travers selon les applications.

En bout des convoyeurs 14, 15, un système pousseur 17, par exemple constitués de vérins électriques (cf. figure 2) met les colis en référence au point de prise du robot 5 ou du robot 6.

Cette prise s'effectue par le préhenseur 7 qui comprend une structure cubique ajourée 18 tenue par un bras 19 du robot 6 et porteuse d'une fourche 20 inférieure, agencée pour soulever les colis à partir du convoyeur, de façon connue, par un dispositif 21 équipé de peignes ou plots verticaux 22 entre lesquels se glissent les pattes 29 de la fourche 20 et qui sont ensuite escamotables.

Les préhenseurs 7 sont également décrits ci-après en référence aux figures 2A et 2B.

Ils comprennent donc une fourche 20 munie des pattes 23 inférieures de saisie entre plots ou peignes, escamotables, et une pince 24 de serrage ou presseur pour coincer le colis en position de transport, de façon connue en elle-même.

Les préhenseurs sont par exemple programmés pour effectuer la prise des colis de face (figure 2A) ou sur le côté (figure 2B) pour gérer l'orientation des colis sur la palette et déposer toujours dans le même sens.

Le colis est ainsi toujours positionné sur le même côté du préhenseur 7 de façon à ce que le robot 5 ou 6 puisse déposer les colis contre des colis déjà présents sur la palette sans perdre de place.

Le colis sera donc soit aligné au bord du préhenseur (figure 2A) soit débordant du préhenseur (figure 2B).

Plus précisément, dans le dispositif 1, chaque robot 5, 6 est équipé d'un préhenseur 7 permettant la prise de colis par en dessous, la sortie de la fourche par rapport à la face de référence 25 (figure 2A), ou le fond 26, (figure 2B), étant ajustée à la dimension de chaque colis.

Le calcul de la palette aboutit quant à lui à deux orientations possibles de dépose des colis sur la palette.

Avantageusement, pour limiter les zones d'interférence potentielles entre robots, l'orientation des préhenseurs à la dépose sur la palette est toujours la même, à savoir celui du sens de retrait des fourches parallèles au grand côté de la palette.

Le dispositif 1 (cf. figure 1) comprend une structure support 27 ou cadre sur lequel sont fixés le poste d'attente 11, les robots 5 et 6 et le poste de dépose 13. Elle comprend également les convoyeurs 14 et 15 munis des systèmes 23 à plots ou peignes 22 de présentation des colis.

Selon le mode de réalisation plus particulièrement décrit ici, et en référence également à la figure 1C, on a successivement au niveau supérieur 9 du dispositif un poste P1, le poste d'attente 11 de la palette vide 3 et le poste de chargement 13.

Dans ce mode de réalisation les moyens 10 de déplacement horizontal comprennent un support 28 par exemple en forme de fourche comprenant deux bords ou branches latérales 28' déplaçables du poste P1 au poste 13 de façon connue en elle-même par exemple par un moteur (non représenté), en supportant les extrémités latérales situées à la périphérie de la palette 3.

La palette et son support passe sous un pont P2 sur lequel va être fixé le robot 5.

Il peut aussi être prévu des rails escamotables entre une position resserrée, de soutien de la palette 3, et une position écartée, de libération pour descente de la palette vers un niveau inférieur 29 (voir figure 2) d'évacuation de la palette chargée 30 par un convoyeur 31 connu en lui-même.

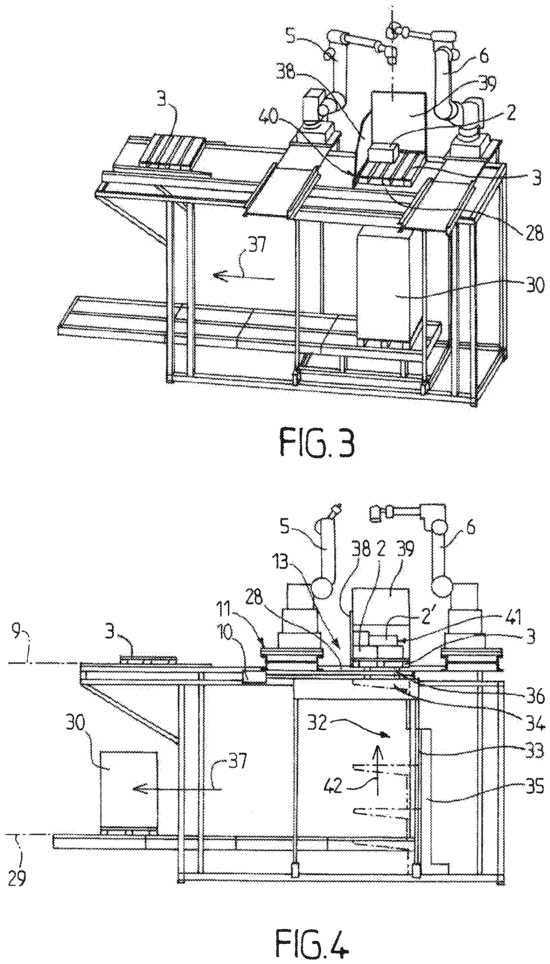

Le dispositif 1 comprend des moyens 32 de déplacement vertical de la palette comprenant un élévateur 33 (voir figure 4) formé par exemple par un chariot motorisé commandé par l'automate 4, ou plaque 34 en équerre fixé sur un ascenseur 35 par exemple à chaine de type connu.

La plaque 34 comprend par exemple des butées 36 sur sa face supérieure agencée pour venir en contact avec la palette 3 par en dessous pour reprendre directement sans jeu vertical celle-ci entre les rails escamotables 28.

Ainsi lorsque ces derniers s'escamotent, il n'y a aucun déplacement ni risque de brusque décalage vertical.

L'élévateur est par ailleurs agencé pour déplacer ensuite la palette 3 en cours de chargement verticalement vers le bas entre le premier niveau 9 et le niveau inférieur 29, pour évacuation (flèche 37) de la palette chargée 30.

On va maintenant décrire en référence aux figures 3 à 7 la palettisation proprement dite des colis.

La figure 3 montre schématiquement le début de palettisation des colis 2 sur la palette 3.

Des plaques verticales 38, 39 de blocage/taquage des colis, sont présentes.

Ces plaques sont par exemple rectangulaires, par exemple en matériau métallique.

Elles sont calées verticalement le long de la palette pour former une cornière de référence en x, y, à angle droit et positionnées par exemple de façon amovible pour que la palette à vide passe en dessous de leurs bords inférieurs 40 lorsqu'elle est déplacée du poste d'attente au poste de chargement.

Elles sont également dimensionnées pour être égales ou un peu plus larges que les longueur et largeur de la palette, la palette passant dessous.

On met ensuite en place une première série 41 de colis 2 (cf. figure 4) sur la palette de façon organisée comme cela sera décrit plus avant ci-après.

Lorsque l'élévateur 32 est libre, la palette 30 étant évacuée, celui-ci monte (flèche 42) pour prendre en charge la palette 3 en cours de construction.

Le pousseur latéral 10 de palette se dégage et va chercher une nouvelle palette 3 pour la positionner au poste d'attente 11.

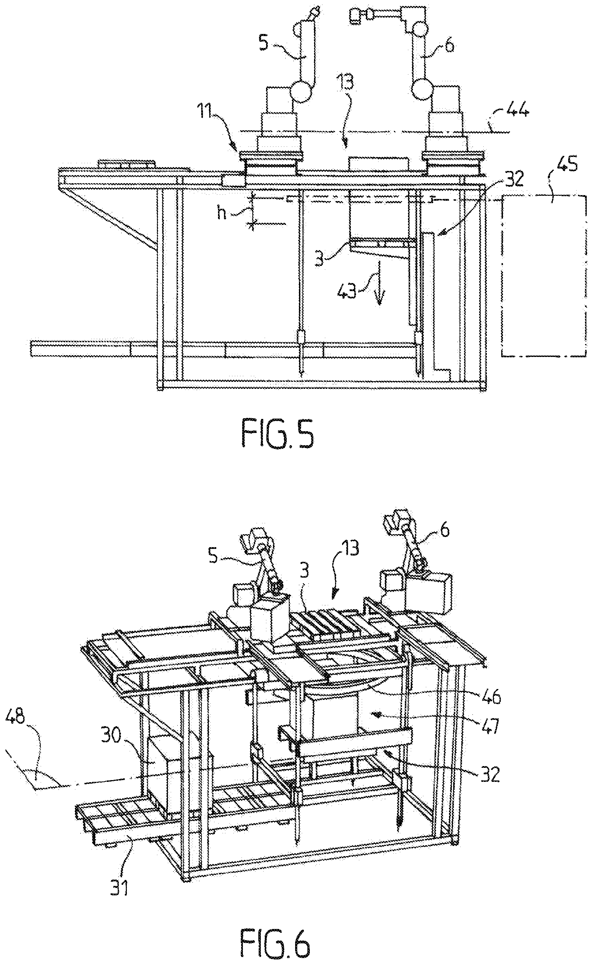

La palette 3 (cf. figure 5) chargée par les premiers colis descend alors (flèche 43) au fur et à mesure pour permettre une dépose des colis à niveau 44 à peu près constant au poste 13.

Un filmage simultané est alors effectué par un système 45 connu en lui-même, symbolisé en trait mixte sur la figure 5, et comprenant par exemple un anneau circulaire 46 connue en elle-même, de dépose sur une hauteur déterminée h.

Lors de cette phase une nouvelle palette 3 (cf. figure 6) est placée en 13 pendant que le filmage se termine en 47, la palette étant alors située à un deuxième niveau intermédiaire 48.

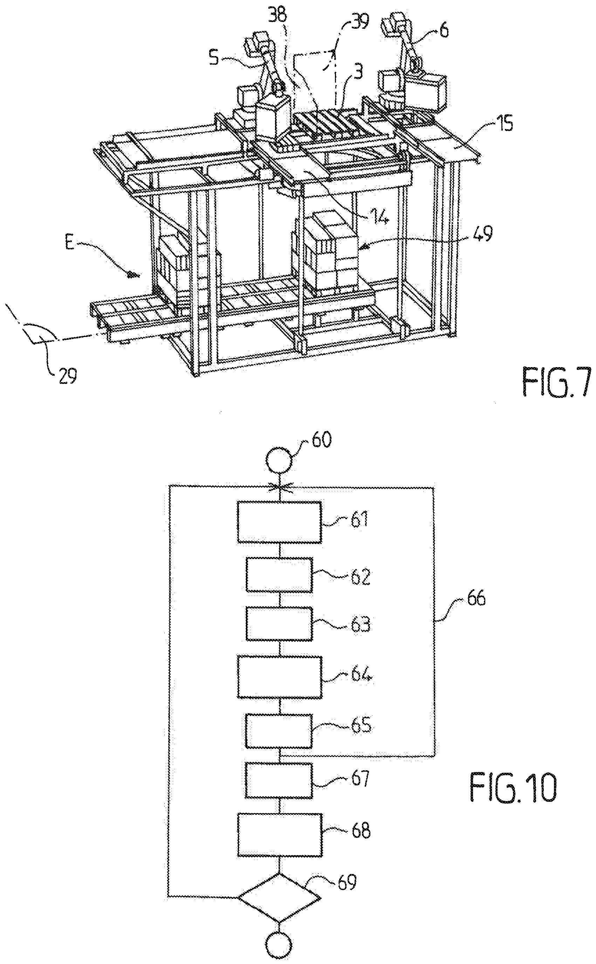

Puis la palette terminée 49 est descendue au niveau inférieur 29 et évacuée en E (cf. figure 7).

Eventuellement les moyens de calcul permettent ensuite par exemple ici de déclencher le cycle suivant.

Pendant ce temps la palette suivante commence à être chargée (cf. à nouveau figure 3).

Dans un mode de réalisation avantageux le dispositif 1 peut être équipé d'un module qui permet la mise en place d'intercalaires pour une meilleure stabilité des colis d'une couche par rapport à l'autre.

Une plaque intermédiaire peut par exemple présenter la moitié ou le quart de la surface de la palette, ou plus souvent la totalité. Ces différentes tailles de plaques permettent de niveler le dessus des colis en totalité ou en partie, en fonction du chargement et de son optimisation.

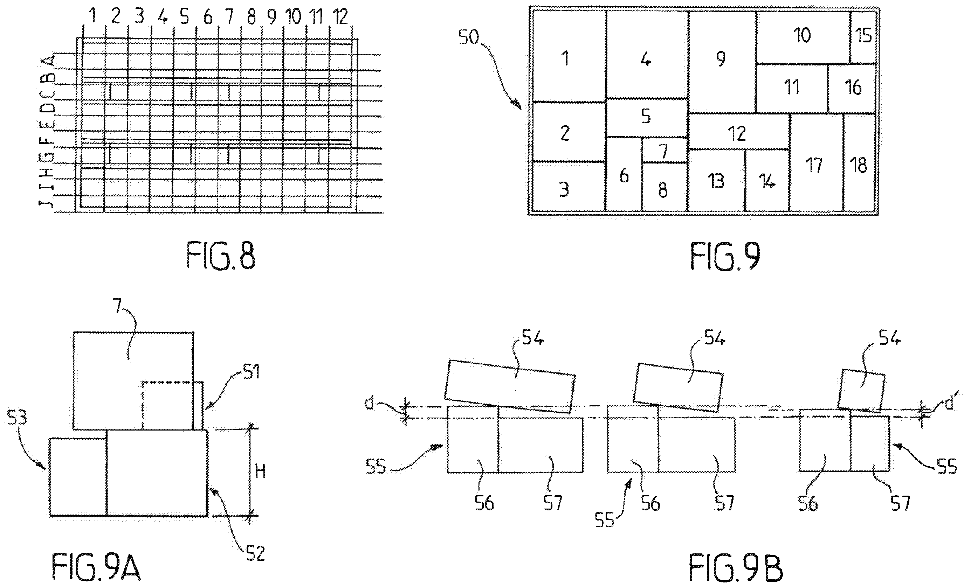

Les intercalaires sont manipulés par les robots 5 et 6 comme des colis, leurs cycles de dépose étant synchronisés avec les cycles de dépose des colis, selon l'ordonnancement prévu par le logiciel de pilotage du procédé mis en oeuvre et dont les étapes vont maintenant être plus particulièrement décrites en référence aux figures 8 à 10.

A partir de données de base sur les colis de tailles différentes par exemple compris dans des fourchettes prédéterminées, on établit de façon automatique ou semi-automatique (avec l'aide d'un opérateur) la composition d'une palette.

Les données sont la hauteur, la largeur, la longueur du produit ou colis et son poids, ainsi que leur gerbabilité et leur conicité.

Les dimensions et poids des palettes utilisées sont quant à elles également précisés, tout comme la hauteur maximale de la palette chargée, par exemple 2 m de hauteur hors tout et les cadences de palettisation, par exemple 850 colis par heure, pouvant atteindre 950 colis/heure.

Ces cadences sont particulièrement élevées grâce à l'agencement de l'invention et constitue donc un avantage important par rapport aux procédés connus.

La hauteur d'arrivée des colis est également introduite dans la base. Elle doit par exemple être comprise entre 3 270 mm et 3 570 mm de hauteur par rapport au niveau inférieur. L'axe de prise des colis est lui aussi défini. Il est par exemple de l'ordre de 1, 5 m par rapport à l'axe des robots ou 0, 5 m par rapport au châssis. Ces valeurs vont bien entendu dépendre du reste du dimensionnement de l'installation.

La partie la plus proche du convoyeur de colis 14, 15 doit quant à elle être supérieure à une valeur minimum de hauteur par rapport à l'axe des robots qui se déplacent en pivotant autour de celui-ci ou par rapport au châssis.

Pour le remplissage de la palette, celle-ci est paramétrée (figure 8) dans le sens de la largeur en colonne de 1 à 12 par exemple et dans le sens de la longueur en lignes A à J, un colis pouvant se situer sur plusieurs cellules et à différents niveaux de couches de la palette.

En fonction de la commande qui est entrée par un opérateur du client (liste de colis), le logiciel réassemble, en utilisant de façon connue les logiciels 3D du marché comme par exemple le produit Cube-IQ de la société canadienne MAGIC LOGIC Optimisation Incorporated, les colis de sorte qu'est aussi formée une palette virtuelle en 3D.

L'ordonnancement des colis est fait en tenant compte des contraintes mécaniques (par devant ou par derrière), de sorte que le niveau du dessus des colis est décroissant du fond vers l'avant.

On a représenté en référence aux figures 9, 9A et 9B un exemple de fonctionnement de palettisation.

Les colis sont ici numérotés de 1 à 18 et se trouvent toujours sur le même côté du préhenseur, les déposes successives s'effectuant toujours dans le même sens.

La palettisation débute par la couche 50, les déposes s'effectuent de A vers J et de 1 vers 12 en traitant des rangs (comme une machine à écrire).

Une fois une première couche 50 de colis réalisée de 1A à 12J la dépose de colis recommence sur ladite première couche ou non, pour former un deuxième dépôt et ainsi de suite.

Dans l'exemple décrit ici l'ordre de mise en place des colis sera par exemple 1, 4, 2, 5, 3, 6, 7, 8, 9, 10, 11, 12, 13, 14, 15, 16, 17, 18.

Il existe des interdictions, le colis n° 12 ne pouvant pas par exemple être mis juste après la dépose du colis n° 9 car il bloquerait la dépose du n° 10 et du n° 11.

En référence à la figure 9A, lorsque le robot vient déposer un colis 51 sur un ou plusieurs colis dit colis socle 52, le préhenseur 7 peut déborder sur ce colis et se retrouver au-dessus d'autres colis (colis sous-jacents).

Pour pouvoir déposer sans écraser ces colis, il faut par exemple que la hauteur H atteinte par le colis socle soit la hauteur la plus grande, le préhenseur 7 se positionnant alors sur le dessus du colis socle 52 sans être en contact avec les colis 53 sous-jacents.

Ces éléments sont des contraintes de positionnement qui vont notamment être prises en compte et permettre le calcul par le logiciel de mise en place des colis, et ce de façon connue en elle-même par l'homme du métier.

On notera que les trajectoires réalisées par le robot impliquent des mouvements par-dessus les colis d'une même rangée, ce qui implique de limiter les différences de hauteur au sein de la palette. De telles limitations vont se faire automatiquement lorsque la constitution de la palette s'effectuera sachant que les colis vont donc être déposés du fond vers l'avant.

On notera également en référence à la figure 9B et par exemple qu'une dépose d'un colis 54 sur plusieurs colis d'une même couche socle 55 peut bien entendu être réalisée sous réserve de rechercher des couches successives les plus planes possibles, de sorte que la différence de hauteur d, d' entre deux colis 56, 57 de la couche socle 55 sont limitées à par exemple une hauteur équivalente à 10% de la base du colis (longueur ou largeur) par exemple maximum de 20 mm.

Les étapes du procédé plus particulièrement décrit vont maintenant être détaillées en référence à la figure 10.

Après l'étape 60 de constitution des palettes en fonction des données des colis à charger, comme décrit ci-avant, on amène en 61 une palette vide au poste d'attente.

Puis on déplace (étape 62) horizontalement la palette du poste d'attente au poste de chargement.

En 63 on commence à empiler les colis sur la palette pour former une première série de colis.

L'étape 64 voit le déplacement vertical du chariot élévateur pour venir saisir la palette qui a déjà commencé à être chargée par-dessus. On continue à empiler en 65 en descendant progressivement la palette pas à pas, et en déposant le film autour des colis au fur et à mesure. Une palette suivante ayant été amenée au poste d'attente (ligne 66, étape 61) on finit de descendre (étape 67) la palette entièrement chargée au niveau inférieur d'évacuation en renouvelant simultanément le cycle d'étapes 62 à 67.

Pendant ce temps la palette chargée est évacuée en 68.

Un test 69 est effectué à la sortie de la palette chargée, pour savoir si il reste des palettes à charger et continuer ou non le procédé.

A noter que dans le mode de réalisation plus particulièrement décrit ici la prise des colis s'effectue suivant deux sens possibles sur le convoyeur de prise et que chaque robot couvre l'intégralité de la surface de la palette. Ainsi en cas de panne d'un des robots, un seul robot peut continuer sans stopper la production.

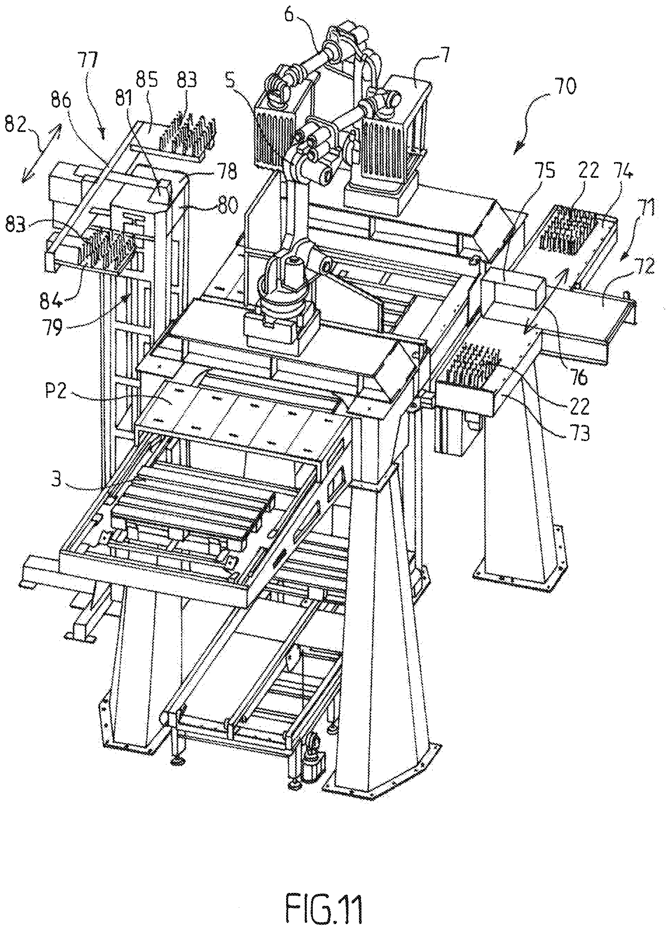

La figure 11 montre un autre mode de fabrication d'un dispositif 70 selon l'invention.

On a utilisé ici les mêmes numéros de référence pour les mêmes éléments que ceux décrits en référence au dispositif des figures précédentes, qui ne seront d'ailleurs pas détaillées plus avant.

En fait ce dispositif diffère uniquement en ce que le système d'amenée 71 des colis par préhension par les robots 5 et 6 ne comprend qu'un convoyeur 72 d'amenée des colis qui sont ensuite répartis alternativement sur les côtés 73 et 74 en étant poussé par un taquet pousseur 75 animé d'un mouvement de va et vient (flèche 76) permettant de placer les colis (non représentés) sur les plots 22 en position basse.

Ceux-ci soulèvent ensuite les colis qui peuvent être pris entre les plots 22 par les fourches 20 de préhensions 7.

Ainsi en cas de problème sur un colis il n'y a pas besoin de libérer entièrement chaque convoyeur d'amenée, mais seulement celui du colis en cause.

Ce dispositif comprend également un système 77 d'amenée de plaque 78 ou plaque intermédiaire alimenté par un magasin 79 central muni d'un chariot élévateur 80 vertical connu en lui-même.

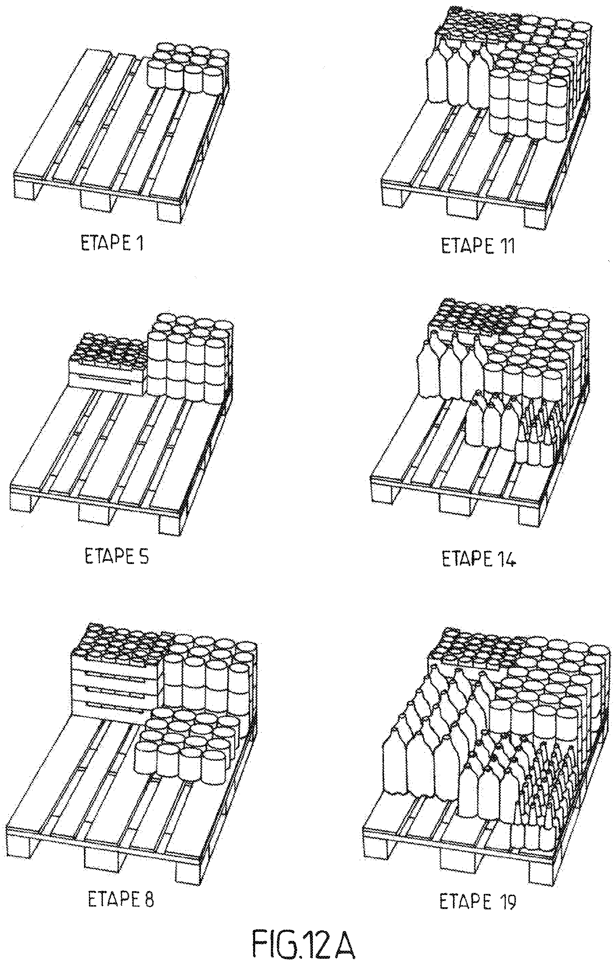

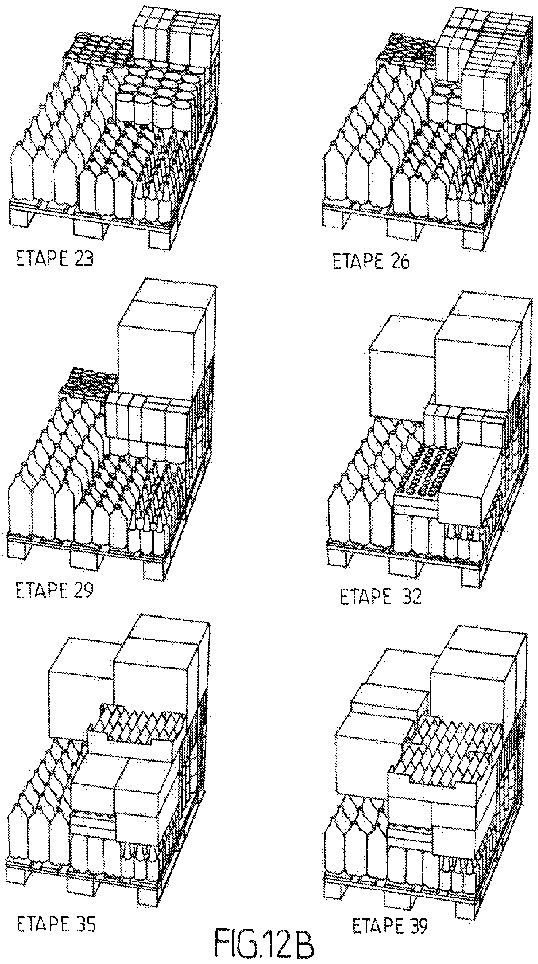

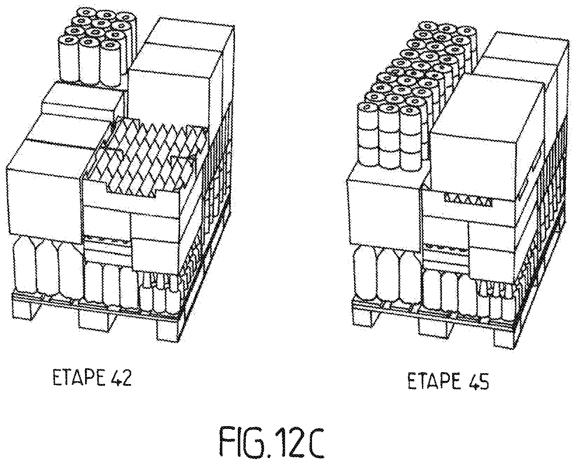

Les figures 12A, 12B et 12C montrent certaines des étapes (1, 5, 8, 11, 14, 19, 23, 26, 29, 32, 35, 39, 42, 45) de chargement intermédiaire d'une palette pour illustrer le remplissage du fond vers l'avant en tenant compte des capacités de rangement des colis les uns par rapport aux autres. Il ne s'agit plus d'un rangement par couches, mais par piles/couches successives, les colis étant alternativement placés par les robots.

Comme il va de soi et comme il résulte également de ce qui précède, la présente invention n'est pas limitée aux modes de réalisation plus particulièrement décrits. Elle en embrasse au contraire toutes les variantes et notamment celles où la palette n'est pas libérée au poste de chargement par le déplacement du chariot 28, mais par des rails escamotables sur lesquels la palette a été posée. Aussi le poste de chargement des colis comprenant deux rails de soutien latéral des bords d'une palette, on escamote lesdits rails pour permettre la descente de la palette par le chariot élévateur.

## Revendications

1. Dispositif (1) d'empilage de colis (2, 2',...) sur une palette (3), comprenant des moyens (10) d'amenée d'une palette vide à un poste d'attente (11) situé à un premier niveau (9) dit niveau supérieur, des moyens pousseurs horizontaux de la palette vide du poste d'attente (11) à un poste de chargement (13), des moyens (5, 6) de chargement de la dite palette vide audit poste (13) de chargement, des moyens (32) de déplacement vertical de la palette (3) comprenant un élévateur (33) agencé pour venir saisir la palette par en dessous au poste de chargement (13) et la déplacer verticalement vers le bas en cours de chargement entre le premier niveau (9) et un dernier niveau (29) dit niveau inférieur, d'évacuation de la palette chargée (30), et des moyens (31) d'évacuation de la palette après chargement, **caractérisé en ce que** les colis sont de tailles différentes, les moyens de chargement comprennent des moyens (4) de calcul et une mémoire agencée pour héberger une base de données contenant les caractéristiques des colis de tailles différentes à empiler, en dimensions, poids et capacité à se ranger les uns par rapport aux autres, les dits moyens de calcul étant propres à permettre de déterminer un ordre de rangement particulier et des positions spatiales pour les colis devant être empilés sur ladite palette à partir du contenu de ladite base de données.

2. Dispositif selon la revendication 1, **caractérisé en ce que** les moyens d'amenée de la palette comprennent un support ajouré de soutien de la palette déplaçable horizontalement entre une position reculée de prise en charge d'une nouvelle palette, une position intermédiaire au poste d'attente et une position au poste de chargement, ledit support étant agencé pour permettre la préhension par en dessous, puis après retrait dudit support, enlèvement de la palette par l'élévateur par en dessous.

3. Dispositif selon l'une quelconque des revendications précédentes, **caractérisé en ce que** les moyens de chargement sont agencés pour charger une première série (41) de colis (2, 2',...), puis, une fois ladite préhension de palette réalisée, commencer le déplacement vertical en permettant l'empilage des colis sur la première série (41) en chargeant la palette à niveau de chargement (44) constant ou sensiblement constant.

4. Dispositif selon la revendication 3, **caractérisé en ce que**, les moyens de chargement comprennent au moins une plaque (38, 39) verticale de blocage et de guidage latéral des colis (2, 2',...) lors de leur chargement, pour former une pile verticale de colis cadrés sur au moins un premier niveau.

5. Dispositif selon l'une quelconque des revendications précédentes, **caractérisé en ce que** il comporte des moyens (45) d'enrobage de la palette par un film plastique au fur et à mesure du déplacement vertical vers le bas de la palette chargée.

6. Dispositif selon la revendication 5, **caractérisé en ce que** les moyens (32) de déplacement vertical de la palette en cours de chargement comprennent des moyens (4) de commande de la descente de la palette par pas d'une hauteur déterminée, et les moyens (45) d'enrobage sont agencés pour enrober par ledit film plastique la partie de colis empilés en vis à vis sur ladite hauteur, avant de descendre d'un pas suivant.

7. Dispositif selon l'une quelconque des revendications précédentes, **caractérisé en ce qu'**il comprend des moyens de chargement de plaques intercalaires sur les piles de colis en cours de chargement.

8. Dispositif selon l'une quelconque des revendications précédentes, **caractérisé en ce que** les moyens de chargement comportent au moins deux bras robotisés (5, 6) travaillant alternativement l'un avec l'autre.

9. Dispositif selon la revendication 8, **caractérisé en ce que** chaque bras (5, 6) est équipé d'un préhenseur (7) à fourche (24) inférieure de support du colis et d'une pince (24') de serrage supérieure de blocage en pression du colis contre la fourche inférieure.

10. Procédé d'empilage de colis de tailles différentes sur une palette, dans lequel :
(i) on amène (61) une palette (3) vide à un poste d'attente (11) situé à un premier niveau (9),
(ii) on déplace horizontalement la palette (3) du poste d'attente (11) à un poste de chargement (13),
(iii) on commence (63) à empiler des colis sur la palette audit poste de chargement,
(iv) on déplace verticalement (64) un chariot élévateur (33) et on vient saisir la palette (3) par en dessous au poste de chargement (13),
(v) on continue (65) à empiler les colis sur la palette en maintenant un niveau (44) de chargement constant ou sensiblement constant par déplacement vertical (43) de la palette en cours de chargement entre le premier niveau (9) et un deuxième niveau (48) correspondant à l'empilement complet de la palette,
(vi) une palette suivante (3') ayant été amenée (66) au poste d'attente (11) on finit de descendre (67) la palette entièrement chargée à un poste d'évacuation et on amène (61) simultanément ladite palette suivante au poste de chargement (13), puis on renouvelle les étapes (iii) à (vi) avec ladite palette suivante **caractérisé en ce que** les caractéristiques des colis (2, 2') à empiler sont de tailles différentes, en dimensions, poids et capacité à se ranger les uns par rapport aux autres, et celles-ci étant stockées dans une base de données, on détermine un ordre de rangement particulier et les coordonnées spatiales des colis devant être empilés sur la palette en conséquence et on effectue ledit empilement dans ledit ordre particulier et avec lesdites positions spatiales à partir des dites données.

11. Procédé selon la revendication 10, **caractérisé en ce que**, on place la palette au poste de chargement par mouvement horizontal d'un support ajouré de soutien de la périphérie de la palette, on soulève la palette par en dessous pour la libérer du support, on retire le support ajouré et on descend la palette en cours de chargement.

12. Procédé selon l'une quelconque des revendications 10 à 11, **caractérisé en ce que** on commande la descente de la palette en cours de chargement par pas d'une hauteur déterminée et on enrobe (64) par un film plastique la palette chargée en colis sur une hauteur en vis à vis avant de descendre d'un pas suivant.

13. Procédé selon l'une quelconque des revendications 10 à 12, **caractérisé en ce que** on charge les colis avec au moins deux bras robotisés (5, 6) en parallèle à partir d'un convoyeur d'alimentation unique muni d'un système de répartition des colis à deux postes de préhension séparés affectés respectivement à chacun des robots.

14. Procédé selon l'une quelconque des revendications 10 à 13, **caractérisé en ce que** on charge au moins une plaque sur les colis avant de continuer et/ou de terminer le chargement de la palette.

15. Procédé selon l'une quelconque des revendications 10 à 14, **caractérisé en ce que** on charge sur une première hauteur une première partie arrière de la palette, avant une partie avant, et ainsi de suite sur une deuxième hauteur jusqu'à une énième hauteur correspondant au remplissage total du chargement prévu.

## Patentansprüche

1. Vorrichtung (1) zur Stapelung von Paketen (2, 2',...) auf einer Palette (3), welche Mittel (10) zur Zuführung einer leeren Palette zu einer Wartestation (11) auf einer ersten Ebene (9), genannt obere Ebene, umfasst, horizontale Mittel zum Schieben der leeren Palette von der Wartestation (11) zu einer Ladestation (13), Mittel (5, 6) zum Beladen der besagten leeren Palette an der Ladestation (13), Mittel (32) für den vertikalen Transport der Palette (3) mit einem Elevator (33), der so angeordnet ist, dass er die Palette an der Ladestation (13) von unten fasst und sie während des Ladevorgangs vertikal nach unten zwischen die erste Ebene (9) und eine letzte, sogenannte untere Ebene (29) zum Abtransport der beladenen Palette (30) befördert, und Mittel (31) zum Abtransport der Palette nach deren Beladung, **dadurch gekennzeichnet, dass** die Pakete unterschiedliche Größen haben, wobei die Lademittel Berechnungsmittel (4) und einen Speicher aufweisen, der so gestaltet ist, dass er eine Datenbank mit den Daten zu Abmessungen, Gewicht und Ordnungsfähigkeit der zu stapelnden, unterschiedlich großen Pakete enthalten kann, wobei sich besagte Berechnungsmittel dazu eignen, ausgehend vom Inhalt besagter Datenbank eine besondere Ordnungsreihenfolge und räumliche Position für die auf besagter Palette zu stapelnden Pakete zu bestimmen.

2. Vorrichtung nach Anspruch 1, **dadurch gekennzeichnet, dass** die Zuführungsmittel der Palette einen gelochten Träger zum Halten der horizontal verschiebbaren Palette zwischen einer zurückgefahrenen Position zur Lastaufnahme einer neuen Palette, einer Zwischenposition an der Wartestation und einer Position an der Ladestation umfassen, wobei besagter Träger so gestaltet ist, dass die Palette von unten gefasst und nach dem Entfernen des besagten Trägers vom Elevator von unten entnommen werden kann.

3. Vorrichtung nach einem der vorhergehenden Ansprüche, **dadurch gekennzeichnet, dass** die Lademittel so angeordnet sind, dass eine erste Reihe (41) von Paketen (2, 2',...) geladen und nach dem besagten Fassen der Palette die vertikale Beförderung starten kann, wobei die Stapelung der Pakete in der ersten Serie (41) durch das Beladen der Palette auf gleichbleibender oder im Wesentlichen gleichbleibender Beladungshöhe (44) möglich ist.

4. Vorrichtung nach Anspruch 3, **dadurch gekennzeichnet, dass** die Lademittel eine vertikale Platte (38, 39) zur Blockierung und seitlichen Führung der Pakete (2, 2',...) während ihrer Beladung aufweisen, um einen vertikalen Stapel gerahmter Pakete auf mindestens einer ersten Ebene zu bilden.

5. Vorrichtung nach einem der vorhergehenden Ansprüche, **dadurch gekennzeichnet, dass** sie Mittel (45) zur Umhüllung der Palette mit einer Plastikfolie während der vertikalen Verschiebung der beladenen Palette nach unten aufweist.

6. Vorrichtung nach Anspruch 5, **dadurch gekennzeichnet, dass** die vertikalen Beförderungsmittel (32) der gerade beladenen Palette Mittel (4) zur Steuerung des Absenkvorgangs der Palette in bestimmten Höhenschritten aufweisen, und die Umhüllungsmittel (45) so angeordnet sind, dass sie den Teil der gestapelten Pakete umhüllen, der sich in der besagten Höhe befindet, bevor die Palette einen weiteren Höhenschritt nach unten abgesenkt wird.

7. Vorrichtung nach einem der vorhergehenden Ansprüche, **dadurch gekennzeichnet, dass** sie Mittel zum Auflegen von Zwischenlagen auf die gerade aufgeladenen Paketstapel enthält.

8. Vorrichtung nach einem der vorhergehenden Ansprüche, **dadurch gekennzeichnet, dass** die Lademittel mindestens zwei Roboterarme (5, 6) umfassen, die im Wechsel miteinander arbeiten.

9. Vorrichtung nach Anspruch 8, **dadurch gekennzeichnet, dass** jeder Arm (5, 6) mit einem unteren Greifer (7) mit Gabel (24) zum Stützen des Pakets und einer oberen Spannzange (24') zum Blockieren des Pakets durch Druckeinwirkung in Richtung der unteren Gabel ausgestattet ist.

10. Verfahren zum Stapeln unterschiedlich großer Pakete auf einer Palette, in welcher:
(i) man (61) eine leere Palette (3) zu einer Wartestation (11) in einer ersten Ebene (9) führt,
(ii) man die Palette (3) von der Wartestation (11) horizontal zu einer Ladestation (13) transportiert,
(iii) man beginnt (63), die Pakete an der besagten Ladestation auf die Palette zu stapeln,
(iv) man einen Elevatorschlitten (33) vertikal (64) verschiebt und die Palette (3) an der Ladestation (13) von unten fasst,
(v) man damit fortfährt (65), die Pakete auf einer gleichbleibenden oder im Wesentlichen gleichbleibenden Ebene (44) durch vertikales Verschieben (43) der gerade beladenen Palette zwischen der erste Ebene (9) und einer zweiten Ebene (48), welche der kompletten Stapelung der Palette entspricht, auf die Palette zu stapeln,
(vi) man, nachdem die nächste Palette (3') zur Wartestation (11) gefahren wurde, die komplett beladene Palette schließlich zu einer Transportstation absenkt (67) und man (61) gleichzeitig die besagte nächste Palette zur Ladestation (13) führt, und anschließend die Schritte (iii) bis (vi) mit besagter nachfolgender Palette wiederholt, **dadurch gekennzeichnet, dass** aufgrund der Tatsache, dass die Daten zu Abmessungen, Gewicht und Ordnungsfähigkeit der zu stapelnden unterschiedlich großen Pakete (2, 2') in einer Datenbank gespeichert sind, man eine besondere Ordnungsreihenfolge und die räumlichen Koordinaten der auf der Palette zu stapelnden Pakete entsprechend ermittelt und man die besagte Stapelung ausgehend von diesen Daten in besagter besonderer Reihenfolge und in den besagten räumlichen Positionen vornimmt.

11. Verfahren nach Anspruch 10, **dadurch gekennzeichnet, dass** man die Palette durch eine horizontale Bewegung eines gelochtem Trägers des Palettenrandes zur Ladestation befördert, man die Palette von unten anhebt, um sie vom Träger zu entnehmen, man den gelochten Träger entfernt und die gerade beladene Palette absenkt.

12. Verfahren nach einem der Ansprüche 10 bis 11, **dadurch gekennzeichnet, dass** man das Absenken der gerade beladenen Palette in bestimmten Höhenschritten steuert und man (64) die mit Paketen beladene Palette in einer gegenüberliegenden Höhe mit einer Plastikfolie umhüllt, bevor sie einen Höhenschritt weiter abgesenkt wird.

13. Verfahren nach einem der Ansprüche 10 bis 12, **dadurch gekennzeichnet, dass** man die Pakete mit mindestens zwei Roboterarmen (5, 6) von einem einheitlichen Vorschubförderer aus, der versehen ist mit einem System zur Verteilung der Pakete auf zwei separate Greifstationen, die jeweils einem der Roboter zugewiesen sind, parallel auflädt.

14. Verfahren nach einem der Ansprüche 10 bis 13, **dadurch gekennzeichnet, dass** man mindestens eine Lage auf die Pakete lädt, bevor das Beladen der Palette fortgesetzt und/oder beendet wird.

15. Verfahren nach einem der Ansprüche 10 bis 14, **dadurch gekennzeichnet, dass** man einen ersten hinteren Bereich der Palette bis zu einer bestimmten ersten Höhe belädt, bevor ein vorderer Bereich beladen wird, und man den Vorgang in einer zweiten Höhe bis zu einer soundsovielten Höhe, welche der kompletten Befüllung der Palette entspricht, fortsetzt.

## Claims

1. A device (1) for stacking packages (2, 2',...) on a pallet (3), comprising means (10) for supplying an empty pallet to a waiting station (11) located at a first so-called upper level (9), horizontal means for pushing the empty pallet from the waiting station (11) to a loading station (13), means (5, 6) for loading said empty pallet at said loading station (13), means (32) for vertically moving the pallet (3) comprising an elevator (33) so arranged as to grip the pallet from underneath, at the loading station (13), and vertically move it downwards during loading between the first level (9) and a final, so-called lower level (29), for removing the loaded pallet (30), and means (31) for removing the pallet after loading, **characterized in that** the packages have different sizes, with the loading means comprising computing means (4) and a memory so arranged as to accommodate a data base containing the characteristics of the packages of different sizes to be stacked, in dimensions, weight and ability to be stored in relation to each other, with said computing means being adapted to enable determining a specific storage order and spatial positions for the packages to be stacked on said pallet from the contents of said database.

2. A device according to claim 1, **characterized in that** the means for supplying the pallet comprises a pallet-holding perforated support which can be horizontally moved from a retracted position for handling a new pallet, an intermediate position at the waiting station, and a position at the loading station, with said support being so arranged as to enable the gripping from underneath, and after retraction of said support, the removing of the pallet from underneath, by the elevator.

3. A device according to any one of the preceding claims, **characterized in that** the loading means is so arranged as to load a first series (41) of packages (2, 2',...), then, once said pallet has been gripped, to start the vertical movement while enabling the stacking of the packages in the first series (41) by loading the pallet to a constant or substantially constant loading level (44).

4. A device according to claim 3, **characterized in that** the loading means comprises at least one vertical plate (38, 39) for locking and laterally guiding the packages (2, 2', ...) when same are loaded, so as to form a vertical stack of packages positioned on at least a first level.

5. A device according to any one of the preceding claims, **characterized in that** it comprises means (45) for coating the pallet with a plastic film when and as the loaded pallet moves vertically downward.

6. A device according to claim 5, **characterized in that** the means (32) for vertically moving the pallet being loaded comprises means (4) for controlling the down motion of the pallet in steps of a determined height, and the coating means (45) is so arranged as to coat with said plastic film the portion of packages stacked face to face on said height, prior to going down to the next step.

7. A device according to any one of the preceding claims, **characterized in that** it comprises means for loading spacer plates on the stacks of packages being loaded.

8. A device according to any one of the preceding claims, **characterized in that** the loading means comprises at least two alternately operating robotic arms (5, 6).

9. A device according to claim 8, **characterized in that** each arm (5, 6) is equipped with a gripper (7) having a lower fork (24) for holding a package and an upper clamp (24') for locking the package and pressing same against the lower fork.

10. A method for stacking packages of different sizes on a pallet, wherein:
(i) an empty pallet (3) is supplied (61) to a waiting station (11) located at a first level (9),
(ii) the pallet (3) is horizontally moved from the waiting station (11) to a loading station (13),
(iii) packages are started (63) to be stacked on the pallet at said loading station,
(iv) a lift truck (33) is moved vertically (64) and the pallet (3) is gripped from underneath at the loading station (13),
(v) stacking of packages on the pallet is continued (65) while maintaining a constant or substantially constant loading level (44) by vertically moving (43) the pallet being loaded between the first level (9) and a second level (48) corresponding to the complete stacking on the pallet,
(vi) when a next pallet (3') has been supplied
(66) to the waiting station (11),
(67) the fully loaded pallet finishes going down (67) to a removing station and said next pallet is simultaneously supplied (61) to the loading station (13), then the steps (iii) to (vi) are repeated with said next pallet, **characterized in that** the characteristics of the packages (2, 2') to be stacked being of different sizes, dimensions, weight and ability to be stored in relation to each other, and these are stored in a data base, a specific storage order and the spatial coordinates of the packages to be stacked onto the pallet are determined accordingly and said stacking is performed in said specific order and with said spatial positions based on said data.

11. A method according to claim 10, **characterized in that** the pallet is placed at the loading station by horizontally moving a perforated support holding the periphery of the pallet, the pallet is lifted from underneath so as to be released from the support, the perforated support is then removed and the pallet being loaded is moved down.

12. A method according to any one of claims 10 to 11, **characterized in that** the down motion of the pallet being loaded is controlled step by step of a determined height and the pallet loaded with packages stacked face to face on said height is coated (64) with a plastic film prior to moving down to the next step.

13. A method according to any one of claims 10 to 12, **characterized in that** the packages are loaded by at least two parallel robotic arms (5, 6) from a single feed conveyor provided with a packages distribution system having two separate gripping stations assigned to each robot, respectively.

14. A method according to any one of claims 10 to 13, **characterized in that** at least one plate is loaded on the packages prior to continuing and/or completing the loading of the pallet.

15. A method according to any one of claims 10 to 14, **characterized in that** a first rear portion of the pallet is loaded up to a first height, before a front portion, and so on up to a second height, up to an nth height corresponding to the full completion of the intended loading.
